# EUROPÄISCHE PATENTANMELDUNG

(11) **EP 0 816 746 A1**
(43) Veröffentlichungstag der Anmeldung: **07.01.1998**
(21) Anmeldenummer: 97110627.3
(22) Anmeldetag: 28.06.1997
(51) Int. Cl.: F16P 3/14

(54) **Sicherheitsschaltungsanordnung**

(30) Priorität: 28.06.1996 DE 19626129
(71) Anmelder: Elan Schaltelemente GmbH, D-35435 Wettenberg (DE)
(72) Erfinder: Ziegler, Olaf, 56379 Geilnau (DE); Krauskopf, Arno,, 35444 Biebertal 3 (DE)
(74) Vertreter: Stoffregen, Hans-Herbert, Dr. Dipl.-Phys.

(57) **Zusammenfassung**

Gegenstand der Erfindung ist eine elektronische Sicherheitsschaltung, die kontaktlose Freigabepfade mit leitend und nichtleitend steuerbaren Halbleiterbauelementen aufweist. Ein Einschalten erfolgt nur, wenn die Halbleiterbauelemente nichtleitend sind und die Ansteuerstromkreise keine defekten Komponeten enthalten.

## Beschreibung

Die Erfindung bezieht sich auf eine Schaltungsanordnung mit einem Schaltelement für wenigstens eine Strombahn wie Freigabepfad einer Sicherheitsschaltung, das über Steuersignale bei Erfüllen von Sicherheitskriterien vom elektrisch leitenden in den nichtleitenden Zustand und vom nichtleitenden in den leitenden Zustand steuerbar ist.

Elektrische Sicherheitsbausteine der vorstehend beschriebenen Art werden zum Ein- und Ausschalten von elektrischen Geräten bzw. Maschinen oder Anlage dann verwendet, wenn als Voraussetzung für das Einschalten die einwandfreie Funktion des Sicherheitsbausteins verlangt wird, d.h. ein Einschalten aufgrund einer Störung im Baustein vermieden werden muß. Bekannte Sicherheitsbausteine enthalten elektromechanische Schaltelemente wie Relais und Schütze.

Der Erfindung liegt das Problem zugrunde, eine mit kontaktlosen Mitteln arbeitende Sicherheitsschaltung mit einem Leistungsbauelement für wenigstens eine Strombahn zu entwickeln, wobei das Schaltelement bei Erfüllung von Sicherheitskriterien mittels wenigstens eines Steuersignals vom nichtleitenden in den leitenden Zustand versetzt werden kann.

Das Problem wird bei einer Schaltungsanordnung der eingangs beschriebener Art erfindungsgemäß im wesentlichen dadurch gelöst, daß das Schaltelement ein Leistungsbauelement ist, das wenigstens ein erstes, über eine galvanische Trennstrecke mit Steuersignalen leitend und nichtleitend schaltbares Leistungshalbleiterbauelement und ein zweites, über eine galvanische Trennstrecke mit Steuersignalen beaufschlagbares leitend und nichtleitend schaltbares Leistungshalbleiterbauelement enthält, daß die beiden Leistungshalbleiterbauelemente in Reihe geschaltet sind, daß zu jedem Leistungshalbleiterbauelement zur Schaltzustandserfassung je ein Halbleiterbauelement parallel gelegt ist, das über eine galvanische Trennstrecke mit einer Auswert-/Ansteuereinheit verbunden ist, die eine eigene Betriebsspannungsversorgung hat und die Eingänge für Einschalt- und Abschaltsignale aufweist und die bei einem Einschaltsignal die Leistungshalbleiterbauelemente nur dann in den leitenden Zustand steuert, wenn die beiden Leistungshalbleiterbauelemente nichtleitend und die Schaltungskomponenten zwischen den Eingängen für die Einschalt- und Abschalt signale und den Steuerelektroden nicht defekt sind. Die in Reihe geschalteten Leistungshalbleiterbauelemente bilden einen redundanten Freigabepfad bzw. Strompfad. Sie sind jeweils mit ihrer Sperrspannung auf die Nennspannung abgestimmt, die an den Stromkreis mit den Leistungshalbleiterbauelementen als Ein- und Abschaltelemente angelegt wird. Die Einschaltung der Leistungshalbleiterbauelemente mit dem Ansteuersignal findet nur dann statt, wenn die beiden Leistungshalbleiterbauelemente nichtleitend und die Ansteuerstromkreise nicht gestört sind. Falls im leitenden Zustand beider Leistungshalbleiterbauelemente in den Ansteuerstromkreisen ein Fehler auftritt, dann wird ein Ansteuersignal nach einem Abschaltvorgang, d.h. nach dem die Leistungshalbleiter nichtleitend waren, nicht mehr das Einschalten wenigstens eines der Leistungshalbleiter bewirken.

Vorzugsweise werden die Leistungshalbleiterbauelemente über ein die Betriebsspannungsversorgung der Auswerteeinheit unterbrechendes Schaltelement nichtleitend gesteuert. Insbesondere ist das Schaltelement ein Not-Aus-Schalter.

Zwecksmäßigerweise sind die Leistungshalbleiterbauelemente MOS-Feldeffekttransistoren, Triac's oder IGBT's, die durch Optokoppler jeweils mit der Auswerteinheit verbunden sind. Die Optokoppler bewirken die galvanische Trennung der Steuerstromkreise der Auswerteinheit und der Leistungstromkreise mit den Leistungshalbleiterbauelementen wie MOS-Feldeffekttransistoren, Triac's oder IGBT's. Weiterhin ist es zweckmäßig, als parallel zu den Leistungshalbleiterbauelementen geschaltete Halbleiterbauelemente Lumineszenzdioden von Optokopplern vorzusehen, deren Phototransistoren jeweils in einer Überwachungsschaltung angeordnet sind.

Bei einer bevorzugten Ausführungsform sind drei Paare je aus wenigstens einem ersten und einem zweiten Leistungshalbleiterbauelement vorgesehen, von denen die ersten Leistungshalbleiterbauelemente mit einer ersten Freigabeschaltung und die zweiten Leistungshalbleiterbauelemte mit einer zweiten Freigabeschaltung der Auswerteinheit verbunden sind, wobei eine erste Überwachungsschaltung für die zweiten Leistungshalbleiterbauelemente und eine zweite Überwachungsschaltung für die ersten Leistungshalbleiterbauelemente vorgesehen ist, wobei die Freigabe der ersten und zweiten Leistungshalbleiterbauelemten nur bei nichtleitenden ersten und zweiten Leistungshalbleiterbauelementen erfolgt.

Jeweils die ersten Leistungshalbleiterbausteine der drei Paare werden gemeinsam zuerst eingeschaltet. Anschließend werden die zweiten Leistungshalbleiterbausteine der drei Paare gemeinsam eingeschaltet. Der Sicherheitsbaustein hat ebenso wie die mit elektromechanischen Bauelementen arbeitenden drei Freigabepfade, die zugleich, d. h. synchrom, ein- und ausgeschaltet werden können.

Bei einer weiteren zweckmäßigen Ausführungsform ist vorgesehen, daß die Phototransistoren der die ersten Leistungshalbleiterbauelemente überwachenden Optokoppler in UND-Verknüpfung mit einer Lumineszenzdiode eines Optokopplers verbunden sind, dessen Phototransistor wenigstens einen Optokoppler steuert, durch dessen Phototriac oder Photothyristor ein Stromkreis zum Optokoppler für die Ansteuerung der zweiten Leistungshalbleiterbauelemente freigebbar ist. Mit dieser Anordnung werden Optokoppler in einer Schaltung so miteinander verbunden, daß nur bei einwandfreien Leistungshalbleiterbauelementen und einwandfrei arbeitenden Überwachungselementen in den Überwachungsschaltungen für die ersten und zweiten Leistungshalbleiterbauelemente ein Ansteuersignal zu den Leistungshalbleiterbauelementen durchgeschaltet werden kann.

Nach einer zweckmäßigen Ausführungsform ist vorgesehen, daß die zu den zweiten Leistungshalbleiterbauelementen parallelen Optokoppler in UND-Verknüpfung untereinander und mit wenigstens einer Lumineszenzdiode eines Oktokopplers verbunden sind, dessen Phototransistor mit dem Phototransistor eines durch die Überwachungsschaltung für die ersten Leistungshalbleiterbauelemente gesteuerten Oktokopplers in UND-Verknüpfung geschaltet ist, dessen Phototransistor wenigstens einen Oktokoppler steuert, dessen Phototriac oder Photothyristor einen Stromkreis zum Oktokoppler für die Ansteuerung der ersten Leistunghalbleiterbauelemente freigibt.

Es ist günstig, wenn die in Reihe angeordneten Phototransistoren der die ersten und zweiten Leistungshalbleiterbauelemente überwachenden Optokoppler jeweils paarweise zu Lumineszenzdioden von Optokopplern mit Phototriacs oder Photothyristor parallel geschaltet sind, die parallel zu den Lumineszenzdioden der die Phototriacs bzw. Photothyristoren für die Freigabe der Leistungshalbleiter enthaltenden Optokoppler gelegt sind. Wenigstens eine dieser parallelen Lumineszenzdioden sendet Licht aus, wenn ein Phototransistor einen anderen Schaltzustand hat als die übrigen Phototransistoren, was auf einen ungleichmäßigen Schaltzustand der Leistungshalbleiterbauelemente hinweist. In diesem Fall wird verhindert, daß die Leistsungshalbleiterbauelemente angesteuert werden können.

Für die Erzeugung eines Steuersignals zum Einschalten der Leistungshalbleiterbauelemente wird insbesondere ein Tastschalter verwendet, der parallel zu einem eine RC-Schaltung enthaltenden Stromkreis angeordnet ist, der in einem Entladekreis eine Lumineszenzdiode eines Optokopplers enthält, dessen Phototriac bzw. Photothyristor das Einschalten der zweiten Freigabeschaltung ermöglicht. Der Phototriac oder Photothyristor dieser Ausführungsform wird leitend, wenn Strom im Entladekreis fließt, d.h. eine Bedingung für die Vorbereitung des Einschaltens der zweiten Leistungshalbleiterbauelemente erfüllt ist und die ersten Leistungshalbleiterbauelemente mit Ansteuersignalen beaufschlagt werden.

Weitere Einzelheiten, Merkmale und Vorteile der Erfindung ergeben sich nicht nur aus den Ansprüchen und den diesen zu entnehmenden Merkmalen -für sich und/oder in Kombination-, sondern auch aus der nachfolgenden Beschreibung eines in einer Zeichnung dargestellten bevorzugten Ausführungsbeispiels.

Es zeigen:
- Fig. 1: ein Schaltbild einer Anordnung mit sechs gleichen Leistungshalbleiterbauelementen, von denen je zwei in einem gemeinsamen Strompfad angeordnet sind, und mit Ansteuerstromkreisen für die Elektroden der Leistungshalbleiterbauelemente,
- Fig. 2: ein Schaltbild eines ersten Teils einer Auswerteinheit, in der Signale von Leistungshalbleiterbauelementen verarbeitet werden und von der Steuersignale an Leistungshalbleiterbauelemente ausgegeben werden,
- Fig. 3: ein Schaltbild des zweiten Teils der Auswerteinheit, in der Signale von Leistungshalbleiterbauelementen verarbeitet werden und von der Steuersignale an Leistungshalbleiterbauelemente ausgegeben werden.

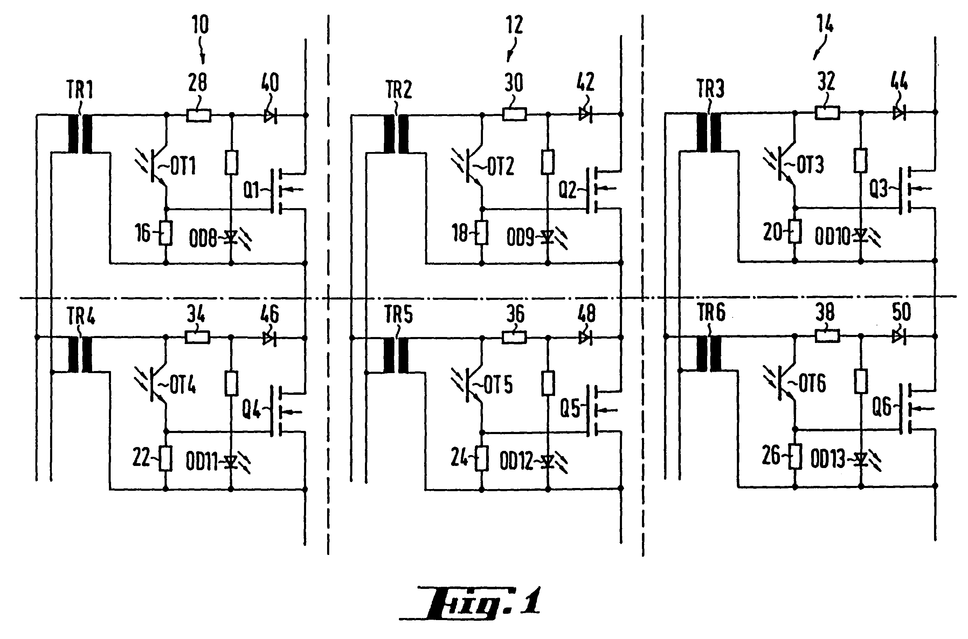

Die Fig. 1 - 3 zeigen eine Schaltungsanordnung, die kontaktlose Schaltelemente enthält, die für das Ein- und Ausschalten von elektrischen Verbrauchern wie Maschinen, Geräten und Anlagen bestimmt sind, wobei die Schaltungsanordnung vorgegebenen bzw. bestimmten Sicherheitsanforderungen genügen muß. Die Schaltungsanordnung kann auch als Sicherheitsbaustein bezeichnet werden, der im Gegensatz zu kommerziell verfügbaren Sicherheitsrelaisbausteinen keine elektromechanischen Teile für das Ein- und Ausschalten der Verbraucher wie Maschinen, Geräte, Steuerungen usw. hat. Peripheriegeräte zur Eingabe von Steuersignalen in die Schaltungsanordnung, z.B. Tastschalter, können mechanische Kontakte enthalten.

Die Sicherheitsschaltung bzw. der Sicherheitsbaustein setzt sich aus mehreren Schaltungsteilen unterschiedlicher Funktion zusammen. In Fig. 1 ist der Leistungsteil dargestellt, der die Freigabepfade 10, 12, 14 enthält. Die Freigabepfade 10, 12, 14 sind gegeneinander elektrisch isoliert und enthalten Mittel zur Freigabe oder Unterbrechung des jeweiligen Stromwegs oder Strompfads. Jeder Strompfad 10, 12, 14 enthält ein erstes Leistungshalbleiterbauelement in Form eines MOS-Feldeffekttransistors Q 1, Q 2, Q 3, dessen nicht näher bezeichnete Drain-Elektrode an eine nicht dargestellte Anschlußklemme gelegt ist. Die ersten MOS-Feldeffekttransistoren Q 1, Q 2, Q 3, im folgenden auch MOSFETS genannt, bilden eine erste Freigabeebene bzw. A-Ebene.

Zu jedem ersten Leistungshalbleiterbauelement Q 1, Q 2, Q 3 ist ein zweites Leistungshalbleiterbauelement in Form eines MOSFETS Q 4, Q 5, Q 6 in Reihe geschaltet. Dabei ist die nicht näher bezeichnete Source-Elektrode jedes MOSFETS Q 4, Q 5, Q 6 an eine nicht dargestellte Anschlußklemme gelegt. Die MOSFETS Q 4 - Q 6 bilden die zweite Freigabe - bzw. B-Ebene. Die drei Pfade 10, 12, 14 führen z. B. die drei Phasen eines Drehstromnetzes.

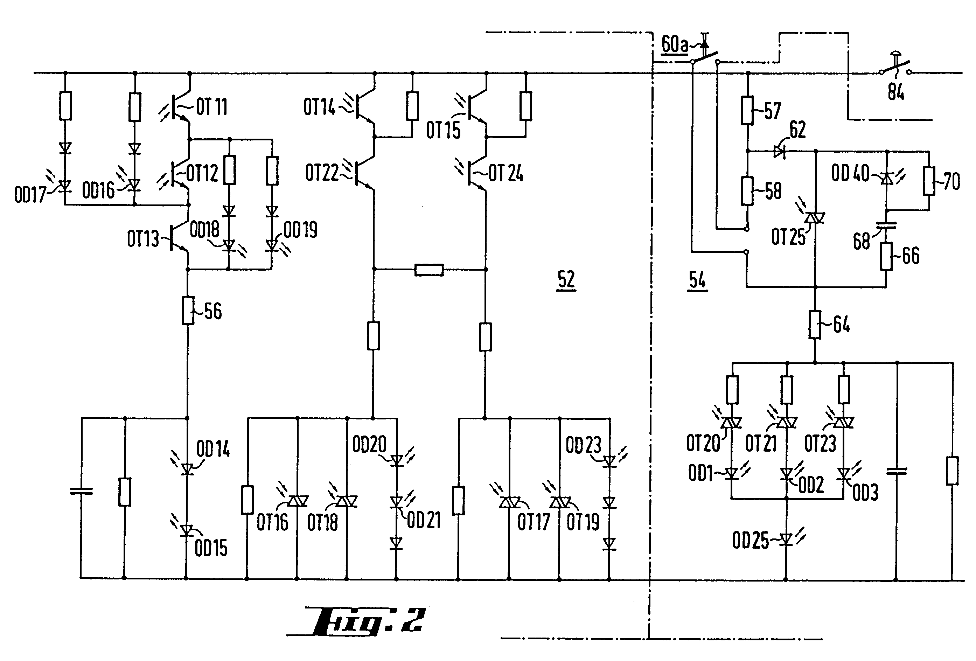

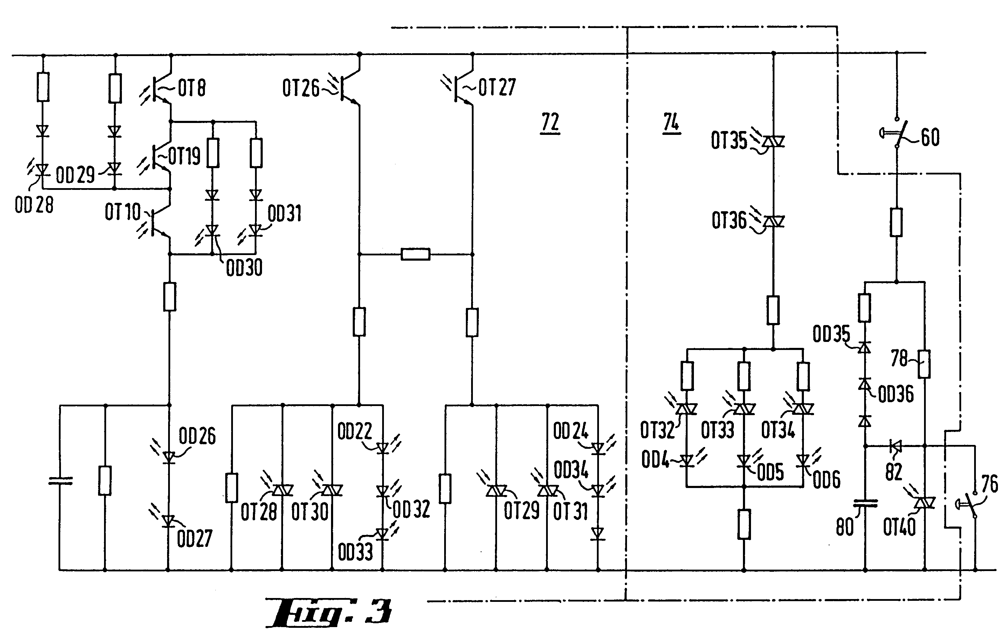

Die Steuerelektroden bzw. Gates der MOSFETS Q1, Q 2, Q 3, Q 4, Q 5, Q 6 sind jeweils an einen Widerstand 16, 18, 20, 22, 24, 26 und den Emitter eines Phototransistors OT 1, OT 2, OT 3, OT 4, OT 5, OT 6 eines Optokopplers angeschlossen. Die zu den Phototransistoren OT 1 bis OT 6 gehörenden Lumineszenzdioden OD 1, OD 2, OD 3, OD 4, OD 5, OD 6, auch Eingangsdioden genannt, sind in der in Fig. 2 und 3 dargestellten Auswerteinheit angeordnet. Die Kollektoren der auch Ausgangstransistoren genannten Phototransistoren OT 1 bis OT 6 sind jeweils mit einem Widerstand 28, 30, 32, 34, 36, 38 und einem Ausgang der Sekundärwicklung eines Transformators TR 1, TR 2, TR 3, TR 4, TR 5, TR 6 verbunden. Die Transformatoren TR 1 - TR 6 stellen eine eigene Betriebsspannung zur Verfügung, die insbesondere von der Spannung, die an die MOSFET - Drain-Source-Strecken angelegt wird, unabhängig ist.

Zwischen den Widerständen 28 bis 38 und den Drain-Elektroden der MOSFETS Q 1 bis Q 6 sind jeweils Dioden 40, 42, 44, 46, 48, 50 angeordnet. Die Kathoden der Dioden 40 - 50 sind jeweils mit den Drain-Elektroden der zugehörigen MOSFETS verbunden. Jeweils zwischen den Kathoden der Dioden 40, 42, 44, 46, 48, 50 und den Source-Elektroden der MOSFETS Q 1, Q 2, Q 3, Q 4, Q 5, Q 6 sind in Reihe nicht näher bezeichnete Widerstände und Lumineszenzdioden OD 8, OD 9, OD 10, OD 11, OD 12, OD 13 angeordnet, die zu Optokopplern gehören, deren Phototransistoren OT 8 bis OT 13 in der in Fig. 2 und 3 dargestellten Auswerteinheit angeordnet sind. Die Auswerteinheit weist vier Funktionsteile auf, die in, folgenden näher beschrieben sind und von denen jeweils zwei in bezug auf die MOSFETS Q 1, Q 2, Q 3 bzw. Q 4, Q 5, Q 6 gleichartig arbeiten.

Die Fig. 2 zeigt eine Überwachungsschaltung 52 für die MOSFETS Q 4, Q 5, Q 6 und eine Freigabeschaltung 54 für die MOSFETS Q 1, Q 2, Q 3. In der Überwachungsschaltung 52 sind zwischen dem einen Pol der Betriebsspannung und dem anderen Pol die Phototransistoren OT 11, OT 12, OT 13, ein Widerstand 56 und zwei Lumineszenzdioden OD 14 und OD 15 in Reihe geschaltet. Die Lumineszenzdioden OD 14, OD 15 gehören zu Optokopplern mit Phototransistoren OT 14, OT 15.

Eine der Fig. 3 zu entnehmende Überwachungsschaltung 72 wird von U_{B1}, die Schaltung 52 von U_{B2}, die Schaltung 54 und 74 von U_{B3} gespeist.

Zwischen dem einen Pol der Betriebsspannungsquelle U_{B2} und dem Emitter des Phototransistors OT 12 bzw. dem Kollektor des Phototransistors OT 13 sind zwei Reihenschaltungen je aus einem nicht näher bezeichneten Widerstand, einer nicht näher bezeichneten Diode und einer Lumineszenzdiode OD 16, OD 17 eines Optokopplers angeordnet.

Gleiche Reihenschaltungen je aus einem nicht näher bezeichneten Widerstand und einer nicht näher bezeichneten Diode sowie einer Lumineszenzdiode OD 18, OD 19 eines Optokopplers sind zwischen dem Emitter des Phototransistors OT 11 und dem Emitter des Phototransistors OT 13 angeordnet.

Die Lumineszenzdioden OD 16, OD 17, OD 18 und OD 19 sind Bestandteile je eines Ausgangstriacs bzw. Phototriacs OT 16, OT 17, OT 18 und OT 19 enthaltenden Optokopplers.

Die Phototriacs OT 16 und OT 18 sind parallel zueinander und zu einer Reihenschaltung aus zwei Lumineszenzdioden OD 20, OD 21 von Optokopplern und einer nicht näher bezeichneten Diode angeordnet. Weiterhin ist ein nicht näher bezeichneter Widerstand parallel zu den Phototriacs OT 16 und OT 18 gelegt.

Der Phototransistor OT 14 ist in Reihe mit einem Phototransistor OT 22 eines Optokopplers und einem nicht näher bezeichneten Widerstand sowie der Parallenschaltung der Phototriacs OT 16, OT 18 und der Lumineszenzdioden OD 20, OD 21 angeordnet.

Die Phototriacs OT 17, OT 19 sind parallel zueinander und zu einem nicht näher bezeichneten Widerstand sowie der Reihenschaltung aus einer Lumineszenzdiode OD 23 eines Optokopplers und zweier nicht näher bezeichneter Dioden angeordnet. Der Phototransistor OT 15 ist in Reihe mit einem Phototransistor OT 24 sowie der Parallelschaltung der Phototriacs OT 17, OT 19 und der Serienschaltung der Lumineszenzdiode OD 23 mit den beiden Dioden angeordnet.

Die Freigabeschaltung 54 enthält einen mit dem einen Pol der Betriebsspannungsquelle U_{B3} verbundenen Widerstand 57, der in Reihe mit einem weiteren Widerstand 58 angeordnet ist. In Reihe mit dem Widerstand 58 ist ein Ein-Tastschalter 60 mit Arbeitskontakt 60 a gelegt, der als separates Bauteil mit der Freigabeschaltung 54 verbunden ist. Die gemeinsame Verbindungsstelle der Widerstände 57, 58 ist an die Anode einer Diode 62 angeschlossen, mit deren Kathode ein Phototriac OT 25 eines Optokopplers verbunden ist. Der Phototriac OT 25 ist weiterhin mit einem Anschluß des Ein-Tastschalters 60 mit dem Kontakt 60 a und einem Widerstand 64 sowie einem weiteren Widerstand 66 verbunden. Der Widerstand 66 gehört zu einer Serienschaltung, die noch einen Kondensator 68 und eine Lumineszenzdiode OD 40 eines Optokopplers enthält. Parallel zur Lumineszenzdiode OD 40 ist ein Widerstand 70 gelegt. Der Phototriac OT 25 ist zu der Serienschaltung aus Lumineszenzdiode OD 40, Kondensator 68 und Widerstand 66 parallel gelegt.

Zwischen dem Widerstand 64 und der Luminenzenzdiode OD 25 des Optokopplers mit dem Phototriac OT 25 sind drei Serienschaltungen parallel zueinander angeordnet. Diese Serienschaltungen enthalten jeweils einen nicht näher bezeichneten Widerstand, den Phototriac OT 20 oder OT 21 oder OT 23 und die Lumineszenzdiode OD 1 oder OD 2 oder OD 3. Die Lumineszenzdiode OD 25 ist mit dem anderen Pol der Betriebsspannungensquelle ebenso wie die Luminenszenzdiode OD 15 und die Phototriacs OT 16, OT 17, OT 18 und OT 19 verbunden.

In Fig. 3 sind eine Überwachungsschaltung 72 für die MOSFETS Q 1 , Q 2, Q 3 und eine Freigabeschaltung 74 für die MOSFETS Q 4, Q 5, Q 6 dargestellt. Die Überwachungsschaltungen 72 für die MOSFETS Q 4, Q 5, Q 6 entspricht im Aufbau weitgehend der Überwachungsschaltung 54 für die MOSFETS Q 1, Q 2, Q 3.

Zwischen den Polen der Betriebsspannungsquelle U_{B1} sind in Reihe die Phototransistoren OT 8, OT 9, OT 10, ein nicht näher bezeichneter Widerstand und zwei Lumineszenzdioden OD 26, OD 27 von Optokopplern geschaltet. Parallel zu den Phototransistoren OT 8, OT 9 sind zwei Reihenschaltungen je aus einem nicht näher bezeichneten Widerstand, einer nicht näher bezeichneten Diode und einer Lumineszenzdiode OD 28 bzw. OD 29 eines Optokopplers angeordnet. Ebenso parallel zu den Phototransistoren OT 9, OT 10 sind zwei Serienschaltungen je aus einem nicht näher bezeichneten Widerstand und einer nicht näher bezeichneten Diode sowie einer Lumineszenzdiode OD 30 bzw. OD 31 eines Optokopplers angeordnet.

Zwischen dem einen Pol der Betriebsspannungsquelle U_{B1} und dem anderen Pol sind der Phototransistor OT 26 des Optokopplers mit der Lumineszenzdiode OD 26, ein nicht näher bezeichneter Widerstand und die Parallelschaltung der Photothyristoren OT 28, OT 30, eines nicht näher bezeichneten Widerstands und der Serienschaltung der Lumineszenzdiode OD 22 des Optokopplers mit dem Phototransistor OT 22 sowie zweier Lumineszenzdioden OD 32 und OD 33 von Optokopplern angeordnet. Zwischen den Polen der Betriebsspannungsquelle ist weiterhin der Phototransistor OT 27 in Reihe mit einem nicht näher bezeichneten Widerstand und der Parallelschaltung eines nicht näher bezeichneten Widerstands, des Phototriacs OT 29, OT 31 der Optokoppler mit den Lumineszenzdioden OD 29 und OD 31 und der Serienschaltung der Lumineszenzdiode OD 24 des Optokopplers mit dem Phototransistor OT 24 sowie einer Lumineszenzdiode OD 34 eines Optokopllers mit den Phototriac OT 34 und einer weiteren, nicht näher bezeichneten Diode angeordnet.

Zwischen den Polen der Betriebsspannungsquelle U_{B3} ist weiterhin ein Ruhekontakt 60 b des Ein-Tast-Schalters 60 in Reihe mit einem nicht näher bezeichneten Widerstand und in Reihe mit zwei parallel angeordneten Serienschaltungen angeordnet, von der die eine einen Widerstand 78 in Reihe mit dem Phototriac OT 40 des die Lumineszenzdiode OD 26 enthaltenden Optokopplers aufweist, während die andere die Reihenschaltung eines weiteren nicht näher bezeichneten Widerstands und zweier Lumineszenzdioden OD 35, OD 36, einer nicht näher bezeichneten Diode und eines Kondensators 80 enthält. Parallel zum Phototriac OT 40 ist ein Kontakt eines Ausschalters 76 gelegt. Eine Diode 82 verbindet den Widerstand 78 bzw. Phototriac OT 40 mit dem Kondensator 80.

Zwischen den Polen der Betriebsspannungsquelle U_{B3} sind weiterhin die Phototriacs OT 35 und OT 36 der Optokoppler mit den Lumineszenzdioden OD 35 und OD 36 in Reihe mit einem nicht näher bezeichneten Widerstand und der Parallelschaltung dreier Zweige je aus einem nicht näher bezeichneten Widerstand, dem Phototriac OT 32 bzw. OT 33 bzw. OT 34 und der Lumineszenzdiode OD 4, OD 5, OD 6 sowie einem weiteren nicht näher bezeichneten Widerstand angeordnet.

Durch einen NOT-AUS-Schalter 84 kann die Betriebsspannung für die Ansteuerkreise der MOSFETS Q 1 - Q 6 abgeschaltet werden.

Mit Hilfe der in Fig.1 - 3 dargestellten Schaltungsanordnung werden die Funktionen herkömmlicher Sicherheitsrelaisbausteine auf Halbleiterebene realisiert. Elektronische Sicherheitsbausteine dienen ebenso wie Sicherheitsrelaisbausteine zur Realisierung sicherheitsbezogener Teile von Steuerungen, wie z. B. Not-Aus-Befehlseinrichtungen, Verriegelungseinrichtungen u.ä.. Mit der erfindungsgemäßen Lehre lassen sich Funktionen erfüllen, die bei herkömmlichen Schaltungen nur mit zwangsgeführtem Relais mit Stromstärken von 8 A realisierbar sind.

Der Sicherheitsbaustein setzt sich aus der in Fig. 1 dargestellten Leistungsstufe mit den Strompfaden 10, 12, 14 und der in den Fig. 2 und 3 gezeigten Auswerteinheit zusammen, die der Funktionsüberwachung dient.

In der Leistungsstufe sind mit Hilfe von Leistungshalbleitern sogenannten Freigabepfade realisiert. Die Reihenschaltung von mindestens zwei Leistungshalbleiterbauelementen erfüllt die Forderung nach einem redundanten Aufbau der Schaltelemente im Freigabepfad. Die elektronische Schaltung zur Generierung von Leistungshalbleiter-Statussignalen ist in die Leistungsstufe integriert.

Über verschiedene Eingänge können externe Signale wie z.B. das Startsignal oder ein Abschaltsignal der Schaltung zugeführt werden.

Gemäß Fig. 1 ist die Leistungsendstufe mit selbstsperrenden MOS-FET's realisiert. Die Leistungsendstufe ist in zwei Ebenen unterteilt (A und B).

Gemäß Fig. 2 und 3 ist die Auswertelektronik mit Optokopplern realisiert. Die Auswertelektronik ist in vier Funktionsbereiche gegliedert.

Besondere Merkmale der Leistungsstufe sind:

Aufbau der Freigabepfade mit Leistungshalbleiter anstelle von mechanischen Schließer- oder Öffnerkontakten.

Die Ansteuerung eines Leistungshalbleiterbauelements erfolgt über Optokoppler bzw. MOSFET's, deren Funktion durch Kontrolle der Reaktion des Leistungshalbleiters überwacht wird. Bei Überwachen mehrerer Leistungshalbleiter muß deren Reaktion bei Betriebswechsel gleich sein. Verhält sich ein Leistungshalbleiter divergent, so muß ein Fehlverhalten der Schaltung vorliegen. Für die Ansteuerung jedes Leistungshalbleiters wird eine unabhängige Spannungsquelle verwendet, aus der ebenfalls eine Schaltung zur Funktionsüberwachung des Leistungshalbleiters gespeist wird. Somit ist sichergestellt, daß bei Ausfall der Spannungsquelle und somit der Überwachungsfunktion kein Ansteuern dieses Leistungshalbleiters möglich ist.

Die Ansteuerung der Leistungshalbleiter über unabhängige Spannungsquellen stellt eine verbraucherunabhängige und somit lastunabhängige Ansteuerung dar.

Besondere Merkmale der Auswerteinheit sind:

Die Auswertelektronik wird vorzugsweise mit Optokopplern oder Feldeffekttransistoren (FET) aufgebaut, da somit bei der Funktion der Schaltung der Fehlerausschluß "Kurzschluß zwischen Ein- und Ausgang des Bauteils" gemacht werden kann.

Ein Fehlverhalten der Leistungshalbleiter wird mit Hilfe von Optokopplern mit Triac-Ausgang gespeichert. Das elektronische Verhalten eines Triacs ist mit dem eines Realais, welches durch externe Beschaltung in Selbsthaltung geht, zu vergleichen. Wird dieses Bauteil einmal angesteuert, so kann es nur durch Unterbrechung der Stromzufuhr in seinen Ausgangszustand zurückversetzt werden.

Die Überwachungsschaltungen 72 und 52 (Vorbereitung zum Einschalten) sind durch zwei voneinander spannungsmäßig unabhängigen Schaltungen realisiert und stehen logisch in direkter Abhängigkeit zueinander: Die Überwachungsschaltung 72 übernimmt die Auswertung von Ebene A der Leistungsstufe mit den MOSFET's Q 4 - Q 6 und gibt gegebenenfalls (wenn Ebene A feherlfrei ist) die Überwachungsschaltung zur Vorbereitung der Freigabe von Ebene A der Leistungsstufe mit den MOSFET's Q 1 bis Q 3 frei. Die Überwachungsschaltungen 52 und 72 arbeiten über Kreuz: Die Überwachungsschaltung 72 wertet den Status von Ebene A aus und bereitet die Freigabe von Ebene B vor. Die Überwachungsschaltung 52 wertet den Status von Ebene B aus und bereitet die Freigabe von Ebene A vor. Des weiteren zeichnen sich die Schaltungen durch fehlererkennende Maßnahmen wie unter "Funktion" beschrieben aus.

Die Freigabeschaltungen 74 und 54 zur Freigabe der Ebene A bzw. Ebene B der Leistungsstufe stehen in direkter zeitlicher Abhängigkeit zueinander:

Nach Betätigung des Starttasters 60 werden als erstes die MOSFET's Q 1 - Q 3 von Ebene A der Leistungsstufe durchgeschaltet. Nach Durchschalten von Ebene A muß innerhalb einer definierten Zeit das Durchschalten der MOSFET's Q 4 - Q 6 von Ebene B folgen, oder es wird eine Fehlermeldung generiert. Besonders vorteilhaft ist die sichere Realisierung dieser Funktionen mit Optokopplern bzw. MOS-FET's.

Die zuvor beschriebene Schaltungsanordnung arbeitet wie folgt:

Die Signale zur Ansteuerung der Leistungshalbleiter bzw. MOSFET's Q 1 - Q 6 werden in der Auswerteelektronik generiert. Bevor ein Durchschalten der MOSFET's erfolgen kann, werden die Statussignale ausgewertet. Der Baustein kann nur dann in Betrieb genommen werden, wenn die Auswertung ergibt, daß vor dem Einschalten alle Leistungshalbleiterbauelemente hochohmigen Zustand sind. Nach erfolgtem Startsignal werden die Leistungshalbleiter durchgesteuert. Ein Stopsignal führt zum Abschalten der Leistungshalbleiter. Der Zeitraum zwischen Start- und Stopvorgang wird als Zyklus bezeichnet. Tritt innerhalb dieses Zyklus eine Fehlfunktion der Leitungsstufe oder der Auswertelektronik auf, so kann der Baustein nicht mehr erneut in Betrieb genommen werden. Nach Beseitigung der Fehlfunktion kann durch Betätigung eines Quitiertasters der Baustein wieder in Betrieb genommen werden.

In der Überwachungsschaltung 72 (Vorbereitung Ebene B) wird der Zustand der Leistungshalbleiter Q 1 - Q 3 ausgewertet. Die zur Auswertung benötigten Statussignale werden hier mit Hilfe der Optokoppler OD 8, OT 8, OD 9, OT 9 und OD 10, OT 10 generiert. Nur wenn die Ausgangstransistoren OT 8, OT 9, OT 10 durchgeschaltet sind, können die Eingangsdioden OD 32, OD 33, OD 34 bestromt werden und das Einschalten der Ebene A wird vorbereitet. Die dazugehörigen Ausgangstriac's OT 32, OT 33, OT 34 sind dem zweiten FB (Freigabe Ebene B) zugeordnet. Eine Freigabe kann nur dann erfolgen, wenn OT 32, OT 33 OT 34 durchgeschaltet sind, d.h. das Einschalten der Ebene vorbereitet ist.

Die Überwachungsschaltung (Vorbereitung Ebene A) ist fast identisch der ersten. Die zusätzlich eingebauten Ausgangstransistoren OT 22, OT 24 stellen lediglich eine Kopplung zwischen Überwachungsschaltung 72 und 52 dar, d.h. wenn Ebene B zum Einschalten vorbereitet ist, kann Ebene A zum Einschalten vorbereitet werden. Die Vorbereitung der Ebene A wird durch Bestromen der Eingangsdioden OD 20, OD 21, OD 23 und das Durchschalten der zugehörigen Ausgangstriac's OT 20, OT 21, OT 23 erreicht, welche der Freigabeschaltung 54 (Freigabe Ebene A) zugeordnet sind.

Beim Einschaltvorgang wird der Taster 60 betätigt. In der Schaltung 74 wir damit ein Stomkreis geöffnet und in der Schaltung 54 ein Stromkreis geschlossen.

In der Freigabeschaltung 54 kommt es zu einem Stromfluß über die Eingangsdioden OD 25 und OD 1, OD 2, OD 3. Der Ausgangstriac OT 25 wird durchgeschaltet und erfüllt nach loslassen des Tasters 60 die Funktion einer Selbsthaltung der Schaltung. Mit Hilfe der Ausgangstransistoren OT 1, OT 2, OT 3 werden die Leistungshalbleiter der Ebene A durchgeschaltet. Der Kondensator 68 kann sich im Einschaltmoment über die Eingangsdiode OD 26 entladen, so daß für den Zeitraum der Entladung der zugehörige Ausgangstriac OT 26 in Schaltung 74 durchgeschaltet ist. Da 60 b im Einschaltmoment geöffnet ist, kann nur für die Entladezeit von 68 der Kondensator 80 in Schaltung 74 über OT 26 entladen werden. Bei diesem Entladevorgang werden die Eingangsdioden OD 35, OD 36 bestromt und die zugehörigen Ausgangstriac's OT 35, OT 36 durchgeschaltet, so daß der Stromkreis über OD 4, OD 5, OD 6 geschlossen wird. Über die Ausgangstransistoren OT 4, OT 5, OT 6 werden die MOSFETS Q 4 - Q 5 durchgeschaltet und Ebene B in Betrieb genommen.

Das Abschalten der Leistungstufe erfolgt zweikanalig durch Unterbrechen der Versorgungsspannung der Freigabeschaltungen 54, 74 FB 2 und FB 4 (+U_{B} und GND) z. B. durch Betätigen eines NOT-AUS-Tasters 84.

Zu obigen Ausführungen sei noch angemerkt, daß als Leistungshalbleiterbauelement rein beispielhaft MOS-FET's angegeben worden, ohne daß hierdurch eine Beschränkung erfolgt. Vielmehr können auch andere geeignete Leistungshalbleiterbauelemente wie Triac's oder IGBT's zum Einsatz gelangen.

Das Verhalten der Schaltung bei Defekt eines Bauteils wird nachfolgend anhand einiger Beispiele beschrieben. Der Bauteildefekt soll innerhalb eines Zyklus erkannt und ein Wiedereinschalten durch eine Fehlerspeicherung (FS) verhindert werden.

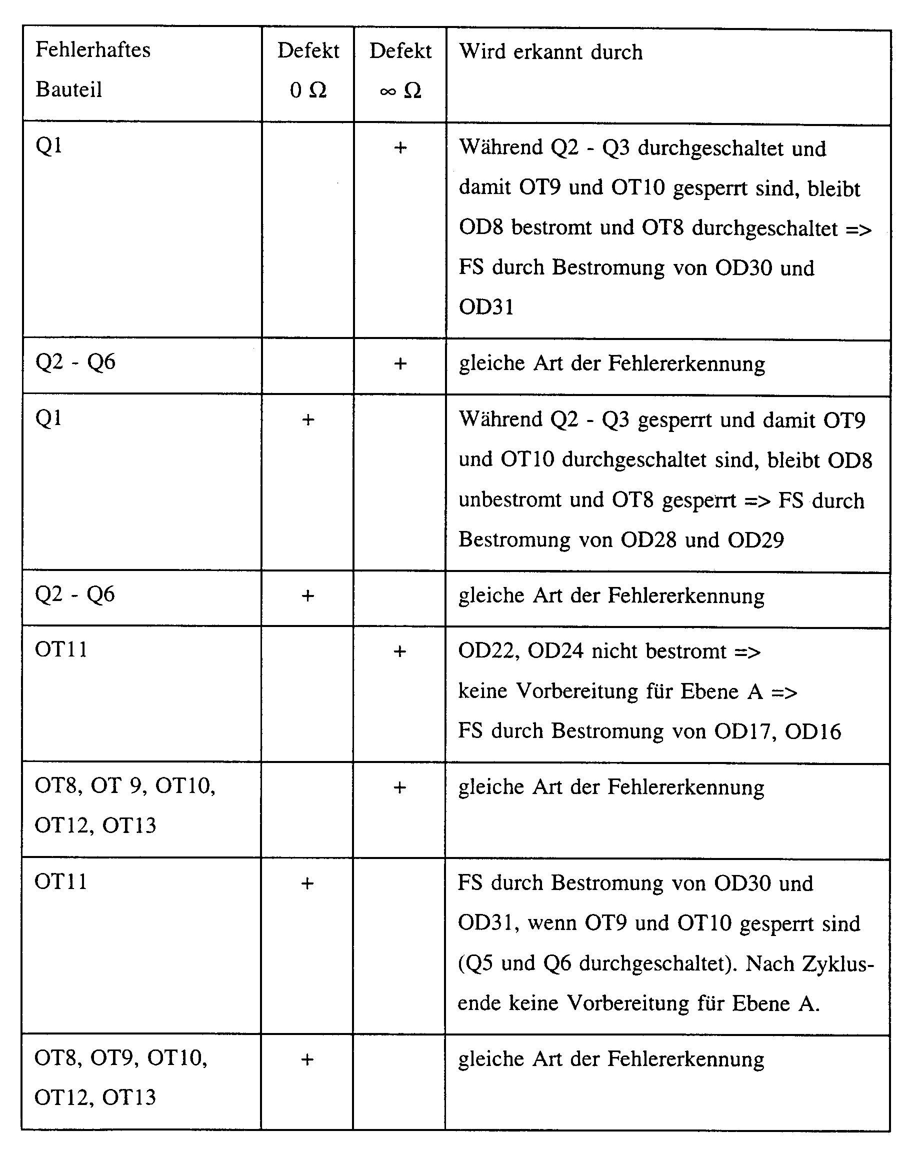

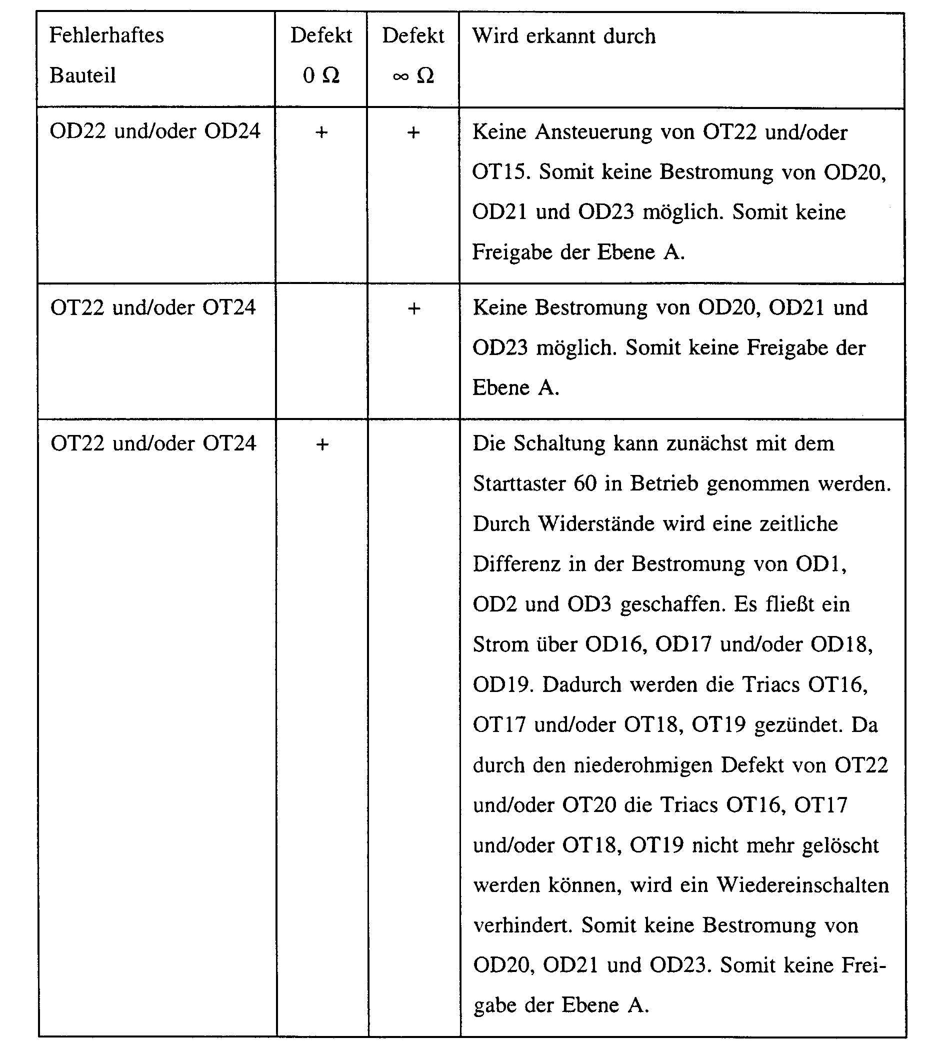

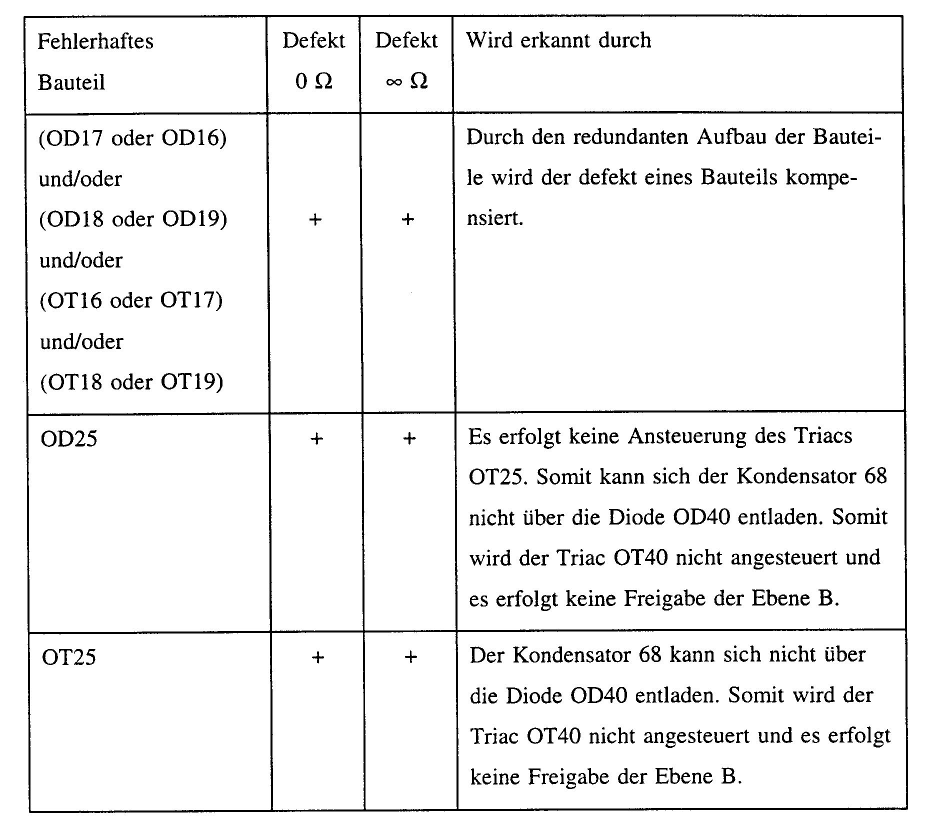

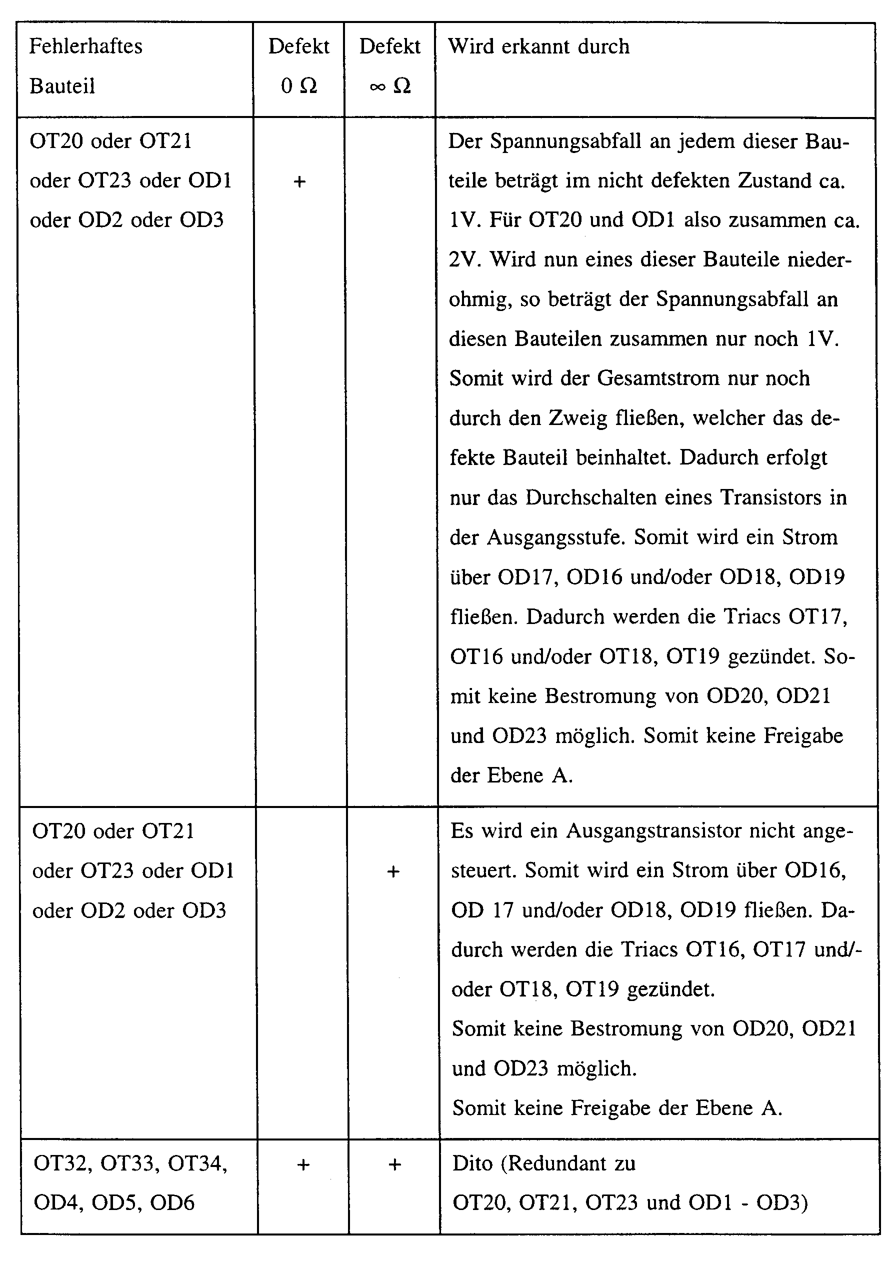

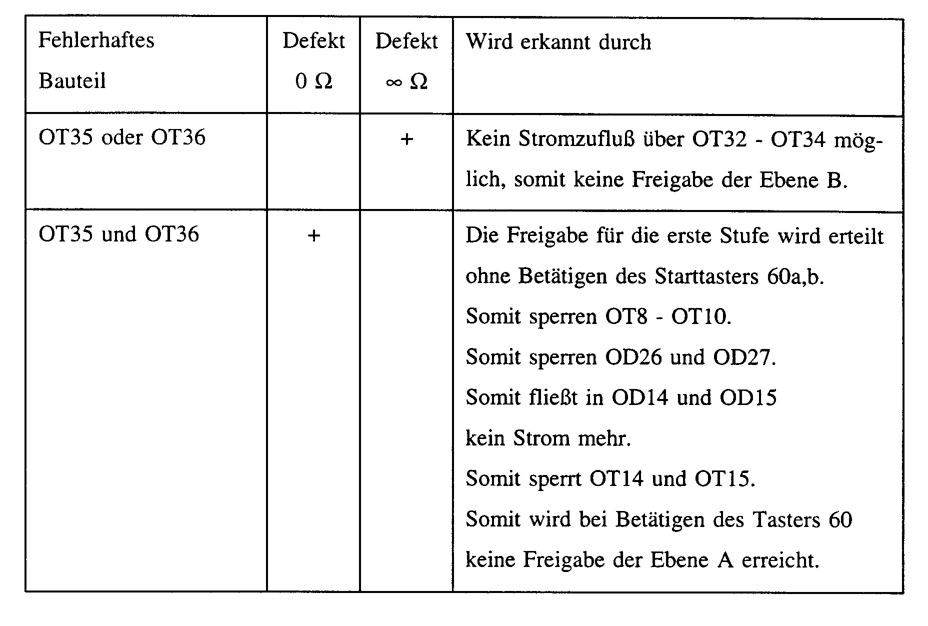

## Patentansprüche

1. Schaltungsanordnung mit einem Schaltelement für wenigstens eine Strombahn wie Freigabepfad einer Sicherheitsschaltung, das über Steuersignale bei Erfüllen von Sicherheitskriterien vom elektrisch leitenden in den nichtleitenden Zustand und vom nichtleitenden in den leitenden Zustand steuerbar ist,
**dadurch gekennzeichnet**,
daß das Schaltelement ein Leistungsbauelement ist, das wenigstens ein erstes, über eine galvanische Trennstrecke (OD 1, OT 1) mit Steuersignalen leitend und nichtleitend schaltbares Leistungshalbleiterbauelement (Q 1) und ein zweites, über eine galvanische Trennstrecke (OD 4, OT 4) mit Steuersignalen beaufschlagbares leitend und nichtleitend schaltbares Leistungshalbleiterbauelement (Q 4) enthält, daß die beiden Leistungshalbleiterbauelemente (Q 1, Q 4) in Reihe geschaltet sind, daß zu jedem Leistungshalbleiterbauelement (Q 1, Q 4) zur Schaltzustandserfassung je ein Halbleiterbauelement (OD 8, OD 11) parallel gelegt ist, das über eine galvanische Trennstrecke (OD 8, OT 8; OD 11, OT 11) mit einer Auswert-/Ansteuereinheit (52, 54; 72, 74) verbunden ist, die eine eigene Betriebsspannungsversorgung hat und die Eingänge für Einschalt- und Abschaltsignale aufweist und die bei einem Einschaltsignal die Leistungshalbleiterbauelemente (Q 1, Q 4) nur dann in den leitenden Zustand steuert, wenn die beiden Leistungshalbleiterbauelemente nichtleitend und die Schaltungskomponenten zwischen den Eingängen für die Einschalt- und Abschalt - signale und den Steuerelektroden nicht defekt sind.

2. Schaltungsanordnung nach Anspruch 1,
**dadurch gekennzeichnet**,
daß die Leistungshalbleiterbauelemente (Q 1, Q 4) durch ein die Betriebsspannungsversorgung der Auswerteinheit unterbrechendes Schaltelement nichtleitend steuerbar sind.

3. Schaltungsanordnung nach Anspruch 1 oder 2,
**dadurch gekennzeichnet**,
daß das Schaltelement ein NOT-AUS-Schalter (84) ist.

4. Schaltungsanordnung nach einem oder mehreren der vorhergehenden Ansprüche,
**dadurch gekennzeichnet**,
daß drei Paare je aus wenigstens einem ersten und zweiten Leistungshalbleiterbauelement (Q 1, Q 4; Q 2, Q 5; Q 3, Q6 ) vorgesehen sind, von denen die ersten Leistungshalbleiterbauelemente (Q 1, Q 2, Q 3) mit einer ersten Freigabeschaltung (54) und die zweiten Leistungshalbleiterbauelemente mit einer zweiten Freigabeschaltung (74) der Auswerteinheit verbunden sind, daß eine erste Überwachungsschaltung (72) zur Überwachung der Schaltzustände der ersten Leistungshalbleiterbauelemente (Q 1, Q 2, Q 3) und eine zweite Überwachungsschaltung (52) zur Überwachung der Schaltzustände der zweiten Leistungshalbleiterbauelemente (Q 4, Q 5, Q 6) vorgesehen ist und daß die Freigabe der zweiten Leistungshalbleiterbauelemente (Q4 , Q 5, Q 6) nur bei nichtleitenden ersten und zweiten Leistungshalbleiterbauelementen (Q 1-Q 6) erfolgt.

5. Schaltungsanordnung nach einem oder mehreren der vorhergehenden Ansprüche,
**dadurch gekennzeichnet**,
daß die Stromkreise zwischen den Eingängen für das wengistens eine Einschaltsignal und den Steuerelektroden der Leistungshalbleiterbauelemente bei defekten Schaltungskomponeten in einen Zustand übergehen, in dem kein Steuersignal zum Umschalten der Leistungshalbleiterbauelemente (Q 1-Q 6) in den leitenden Zustand zu den Steuerelektroden geleitet wird.

6. Schaltungsanordnung nach einem oder mehreren der vorhergehenden Ansprüche,
**dadurch gekennzeichnet**,
daß die Leistungshalbleiterbauelemente z. B. MOS-Feldeffekttransistoren (Q 1 - Q 6), Triac's oder IGBT's sind, die jeweils durch Optokoppler (OD 1, OT 1; OD 2, OT 2; OD 3, OT 3; OD 4, OT 4; OD 5, OT 5; OD 6, OT 6; OD 8, OT 8; OD 9, OT 9; OD 10, OT 10; OD 11, OT 11; OD 12, OT 12, OD 13; OT 13) mit der Auswerteinheit verbunden sind.

7. Schaltungsanordnung nach einem oder mehreren der vorhergehenden Ansprüche,
**dadurch gekennzeichnet**,
daß die parallel zu den MOS-Feldeffekttransistoren (Q 1 - Q 6) geschalteten Optokoppler Lumineszenzdioden (OD 8, OD 9, OD 10, OD 11, OD 12, OD 13) aufweisen, deren zugeordnete Phototransistoren (OT 8, OT 9, OT 10, OT 11, OT 12, OT 13) jeweils in einer Überwachungsschaltung (72; 52) angeordnet sind.

8. Schaltungsanordnung nach einem oder mehreren der vorgehenden Ansprüche,
**dadurch gekennzeichnet**,
daß die Phototransistoren (OT 8, OT 9, OT 10) der zu dem ersten Leistungshalbleiterbauelement (Q 1, Q 2, Q 3) parallelen Optokoppler in UND-Verknüpfung mit wenigstens einer Lummineszenzdiode (OD 26) eines Optokopplers verbunden sind, dessen Phototransistor (OT 26) wenigstens einen Optokoppler (OD 32, OD 33) steuert, durch dessen Phototriac (OT 32, OT 33) ein Stromkreis zum Optokoppler (OD 4, OD 5) für die Ansteuerung der zweiten Leistungshalbleiterbauelemente (Q 4, Q 5) freigebbar ist.

9. Schaltungsanordnung nach Anspruch 8,
**dadurch gekennzeichnet**,
daß die zu den zweiten Leistungshalbleiterbauelementen (Q4 - Q6) parallelen Optokoppler in UND-Verknüpfung untereinander mit wenigstens einer Lumineszenzdiode eines Oktokopplers (OD14, OD15) verbunden sind, dessen Phototransistor (OT14, OT15) mit dem Phototransistor (OT 22) eines durch die Überwachungsschaltung für die ersten Leistungshalbleiterbauelemente gesteuerten Oktokopplers (OD22) in UND-Verknüpfung geschaltet ist, dessen Phototransistor (OT14) wenigstens einen Oktokoppler (OD20, OD21) steuert, dessen Phototriac (OT20, OT21) oder Photothyristor einen Stromkreis zum Oktokoppler (OD1, OD2) für die Ansteuerung der ersten Leistunghalbleiterbauelemente (Q1 - Q3) freigibt.

10. Schaltungsanordnung nach einem oder mehreren der vorhergehenden Ansprüche,
**dadurch gekennzeichnet**,
daß die in Reihe angeordneten Phototransistoren (OT8, OT9, OT10; OT11, OT12,OT13) der Optokoppler für die Überwachung der Leistungshalbleiterbauelemente jeweis paarweise zu Lumineszenzdioden (OD 28, OD30, OD 16, OD18) von Optokopplern parallel geschaltet sind, die Phototriac's (OT28, OT30, OT16, OT18) aufweisen, die parallel zu Lumineszenzdioden (OD20, OD21; OD32, OD33) der die Phototriac's (OT20, OT21; OT32, OT3) für die Freigabe der Leistungshalbleiter (Q1, Q2, Q4, Q5) enthaltenden Optokoppler gelegt sind.

11. Schaltungsanordnung nach einem oder mehreren der vorhergehenden Ansprüche,
**dadurch gekennzeichnet**,
daß als Einschaltsteuerelement ein Tastschalter parallel zu einem eine RC-Schaltung enthaltenden Stromkreis angeordnet ist, der in einem Entladekreis eine Lumineszenzdiode (OD25) eines Optokopplers aufweist, dessen Phototriac (OT 25) ein Ansprechen der Freigabeschaltung bewirkt und dadurch ein Zeitfenster festlegbar ist, daß zur Inbetriebnahme des Sicherheitsbausteins, in dem die Freigabe der zweiten Leistungsstufe erfolgt, in Betrieb genommen werden kann.
